# EUROPÄISCHE PATENTSCHRIFT

(11) **EP 1 919 778 B1**
(45) Veröffentlichungstag und Bekanntmachung des Hinweises auf die Patenterteilung: **23.12.2009**
(21) Anmeldenummer: 06754691.1
(22) Anmeldetag: 08.07.2006
(51) Int. Cl.: B65C 9/06, B65C 3/16, B65G 17/48

(54) **VORRICHTUNG UND VERFAHREN ZUM HÖHENAUSGLEICH IN BEHÄLTERBEHANDLUNGSMASCHINEN**
VERTICAL ADJUSTMENT DEVICE AND METHOD IN RECEPTACLE PROCESSING MACHINES
DISPOSITIF ET PROCEDE POUR COMPENSER LA HAUTEUR DANS DES MACHINES DE TRAITEMENT DE RECIPIENTS

(30) Priorität: 30.08.2005 DE 102005041120
(43) Veröffentlichungstag der Anmeldung: 14.05.2008
(73) Patentinhaber: KRONES Aktiengesellschaft, 93073 Neutraubling (DE)
(72) Erfinder: EDER, Erich, 93093 Donaustauf (DE); HUMELE, Heinz, 93107 Thalmassing (DE); ROIDL, Wolfgang, 93180 Deuerling (DE)
(86) Internationale Anmeldenummer: PCT/EP2006/006707
(87) Internationale Veröffentlichungsnummer: WO 2007/025602

(56) Entgegenhaltungen:
- EP-A- 0 487 020
- WO-A-2004/014779
- DE-A1- 4 131 699
- US-A- 3 990 316
- US-A- 5 816 029
- US-B1- 6 279 722

## Beschreibung

Die Erfindung betrifft eine Vorrichtung gemäß dem Oberbegriff des Anspruchs 1 und ein Verfahren zum Etikettieren von Behältern gemäß dem Oberbegriff des Anspruchs 17

Solche Vorrichtungen zum Behandeln von Behältern werden hauptsächlich im lebensmittelverarbeitenden Gewerbe, insbesondere im getränkeverarbeitenden Gewerbe eingesetzt. Bei den Behandlungen der Behälter handelt es sich z. B. um das Füllen oder das Reinigen dieser, hauptsächlich ist damit aber das Etikettieren der Behälter gemeint. Behandelt werden hauptsächlich Behälter mit Halskragen, also Dosen, Flaschen oder dergleichen, wobei die Behandlung von PET-Flaschen in solchen Maschinen am häufigsten durchgeführt wird. Vorzugsweise handelt es sich also bei der vorgeschlagenen Vorrichtung bzw. dem vorgeschlagenen Verfahren um eine Etikettierung von Kunststoff-, insbesondere von PET-Behältern.

In der EP 1 264 771 wird beispielsweise eine Behälterbehandlungsvorrichtung gemaß dem Oberbegriff des Anspruchs 1 bzw. 17 gezeigt, die in der Weise verstellt werden kann, dass verschieden hohe Behälter behandelt werden können. Es handelt sich um eine Maschine zum Etikettieren von Behältern mit einem Einlaufsternrad, einem umlaufenden Behältertisch auf dem die Behandlung stattfindet und einem Auslaufsternrad. Die Tatsache, dass verschieden hohe Behälter in ein und der selben Maschine behandelt werden können, wird dadurch bewerkstelligt, dass der umlaufende Flaschentisch in seiner Höhe verstellbar ist.

Nachteil dieser Erfindung ist es, dass die Höhenverstellung des Flaschentisches mit einem sehr hohen baulichen Aufwand verbunden ist.

Es ist deshalb Aufgabe der vorliegenden Erfindung, eine Behälterbehandlungsvorrichtung und ein Verfahren bereitzustellen, mit deren Hilfe es in einfacher Weise möglich ist, verschieden hohe Behälter in ein und der selben Maschine zu bearbeiten, wobei der baulich Aufwand minimiert wird.

Erfindungsgemäß wird die Aufgabe bezüglich der Vorrichtung gemäß dem Merkmal des Anspruchs 1 und die Aufgabe bezüglich des Verfahrens gemäß des Merkmal des Anspruchs 17 gelöst.

Die Vorrichtung wird dadurch realisiert, dass der Abstand von einer Behälterträgereinheit zu einer Transportebene durch die Variation der Bauhöhe der Behälterträgereinheit veränderbar ist. Eine Transportebene ist dabei diejenige Ebene, in der sich während des gesamten Transports der Halskragen der zu behandelnder Behälter bewegt. Diese Transportebene ist dabei im Wesentlichen parallel zu einem Traggestell angebracht, an dem sich die Behälterträgereinheiten befinden.

Die Behälterträgereinheit ist vorzugsweise so ausgebildet, dass sie zumindest aus einem Behälterträger und einem Behälterteller besteht. Gemäß einer Ausführungsform der Erfindung wird die Variation der Bauhöhe der Behälterträgereinheit dadurch bewerkstelligt, dass zwischen dem Behälterträger und dem Behälterteller Distanzstücke einsetzbar sind. Diese Distanzstücke können den gleichen Durchmesser wie der Behälterträger bzw. der Behälterteller haben, wobei es auch denkbar ist, Distanzstücke mit kleineren Durchmessern zwischen die beiden Teile einzufügen. Die Distanzstücke können entweder zwischen dem Behälterträger und dem Behälterteller fest verankert werden, was z. B. durch eine Schraubverbindung geschehen kann, oder sie können durch einen Schnellverschluss bzw. Schnappverbindung befestigt werden.

Nach einer weiteren Ausführungsform der Vorrichtung ist es denkbar, verschieden hohe Behälterträger zu verwenden, um die Bauhöhe der Behälterträgereinheit zu variieren. Bei einer Veränderung der Höhe der Behälter wäre es dann nötig, den Behälterträger aus dem Traggestell zu entfernen und einen anders hohen Behälterträger ins Traggestell einzusetzen.

Besonders bevorzugt ist eine Ausführungsform der Erfindung, bei der verschieden hohe Behälterteller auf den Behälterträger aufsetzbar sind. Dabei muss nicht der gesamte Behälterträger ausgewechselt werden, der hier in dem Traggestell fest verankert bleibt, sondern es wird lediglich ein anderer Behälterteller auf den Behälterträger aufgesetzt. Diese Ausführungsform hat den Vorteil, dass eine sehr einfache Bauform entsteht, da der Behälterteller an und für sich ein leicht zugängliches und leicht austauschbares Teil ist.

Gemäß einer bevorzugten Weiterbildung der Erfindung besteht die Behälterträgereinheit zusätzlich aus einer Behälterzentrierung. Die Behälterzentrierung zentriert den Behälter auf dem Behälterteller um eine Behandlung zu ermöglichen bzw. zu optimieren. Sie ist dabei so geschaffen, dass sie die Kontur des zu behandelnden Behälters zumindest teilweise erfasst. Die Behälterzentrierung ist ein Bauteil, das nahezu bei jedem Behälterwechsel ausgetauscht werden muss, da diese an die Behälterform bzw. an die Behältergröße angepasst werden muss. Eine bevorzugte Ausführungsform der Erfindung besteht also darin, wenn das sowieso auszuwechselnde Bauteil derart verändert wird, dass bei einem Wechsel nicht nur andere Behälterkonturen bzw. Formen verarbeitet werden können, sondern auch verschiedene Behälterhöhen. Dazu verändert sich neben der eigentlichen Zentrierfläche auch die Höhe des Bauteils. Dadurch können mit dem Wechsel eines Bauteils die Kriterien Behälterdurchmesser, Behälterform und Behälterhöhe verändert werden. Die Behälterzentrierungen können an den Behältertellern sowohl fest mit Schrauben als auch leicht lösbar durch Schnellverschlüsse verbunden sein.

Eine weitere Ausführungsform der Erfindung besteht darin, dass die Variation der Bauhöhe der Behälterträgereinheit durch den Wechsel nicht nur eines, sondern mehrerer Bauteile erfolgt. So ist es z. B denkbar, dass sowohl der Behälterteller als auch die Behälterzentrierung ausgewechselt werden. Somit können z. B. Formatteile gespart werden, wenn der ausgewechselte Behälterteller nur einen Teil der zu variierenden Höhe bereitstellt und die Behälterzentrierung, die sowieso meistens ausgewechselt werden muss, also ein nicht verzichtbares Bauteil ist, den Rest der Höhe ausgleicht.

Eine bevorzugte Weiterbildung der Erfindung ist derart ausgestaltet, dass die Behälterzufuhr zur Behandlungsvorrichtung von einem Einlaufsternrad, bzw. die Behälterabfuhr von der Vorrichtung von einem Auslaufsternrad gebildet ist. Vorzugsweise sind die Sternräder mit Greifern ausgestattet, die die Behälter klemmend erfassen können.

Gemäß einer weiteren bevorzugten Weiterbildung der Erfindung handelt es sich bei den Behältern um Flaschen mit einem Halskragen, vorzugsweise um Kunststoffflaschen, noch bevorzugter um PET-Flaschen. Kunststoff- bzw. PET-Flaschen weisen diesen Halskragen auf, um eine optimale Handhabung der Behälter zu gewährleisten. Vorzugsweise sind die Greifer des Einlauf- bzw. Auslaufsternrades so ausgeprägt, dass sie die Kunststoff- bzw. PET-Flaschen am Halskragen klemmend ergreifen können. Dieses Ergreifen ist dabei sowohl oberhalb als auch unterhalb des Halskragens möglich.

Eine bevorzugte Weiterbildung der Erfindung besteht darin, dass die Behälter während ihrer Behandlung von der Behälterträgereinheit und einer Zentrierglocke von oben und unten klemmend gehalten werden. Dazu ist es vorteilhaft, wenn sowohl die Behälterträgereinheit als auch die Zentrierglocke in Richtung der Längsachse der Behälterträgereinheit nach oben und nach unten bewegt werden können. Vorzugsweise wird diese Bewegung durch eine Hubkurve im Zusammenwirken mit einer Rolle durchgeführt. Eine alternative Ausführungsform besteht in der Verwendung von Zylindern wie z. B. Pneumatik- oder Hydraulikzylindern zum Heben bzw. Senken der Behälterträgereinheit und der Zentrierglocke.

Handelt es sich bei dem Behandlungsvorgang um einen Etikettiervorgang bzw. einen Inspektionsvorgang, so ist es vorteilhaft, wenn die Behälterträgereinheit im Traggestell um ihre Längsachse drehbar gelagert ist. Dadurch können z. B. Rundumetikettieraufgaben bzw. Inspektionsaufgaben, die den gesamten Flaschenumfang betreffen durchgeführt werden.

Dazu ist es notwendig, dass die gewünschte Rotationsbewegung auf die Behälterträgereinheit übertragen wird. Als Mittel zur Übertragung einer solche Drehbewegung ist vorzugsweise ein Zahnrad vorgesehen, das an der Behälterträgereinheit befestigt ist und Energie von z.B. einem Zahnriemen aufnimmt. Alternativ ist es beispielsweise denkbar, dass die Drehbewegung von einem Servomotor an die Behälterträgereinheit übertragen wird, wobei vorzugsweise jede Behälterträgereinheit einen eigenen Servomotor besitzt. Dies ist besonders dann von Vorteil, wenn sogenannte Formbehälter behandelt werden, die in einer exakten Ausrichtung positioniert werden müssen. Hier kann ein programmgesteuerter Servomotor genau die richtige Drehposition ansteuern an der der Behandlungsvorgang stattfinden soll.

Gemäß einer weiteren bevorzugten Weiterbildung der Erfindung besitzt jeder Behälterträger Zentrierelemente, die Gegenstücke aufnehmen können, die an Bauelementen befestigt sind, die von dem Behälterträger aufgenommen werden müssen. Diese Gegenstücke können sowohl an den Behältertellern als auch an den Distanzstücken befestigt sein, die zwischen den Behältertellern und den Behälterträgereinheiten eingeführt werden können.

Um auch hier die Bearbeitung von Formflaschen gewährleisten zu können sind die Zentrierelemente so im Behälterträger angebracht, dass eine eindeutige Positionierung der Behälterteller auf den Behälterträgern bezüglich ihrer Umfangsposition gewährleistet ist. Ein solches Zentrierelement bzw. ein solches Gegenstück kann beispielsweise von einem Bolzen und einer Ausnehmung gebildet werden.

Gemäß einer Ausführungsform der Erfindung wird die Bauhöhe der Behälterträgereinheit dadurch variiert, dass Distanzstücke zwischen dem Behälterträger und dem Behälterteller einsetzbar sind. Dabei ist es denkbar, dass die Distanzstücke fest am Behälterträger verankert werden, z. B. mit einer Schraube, es ist aber auch denkbar, dass die Distanzstücke klemmend zwischen den Behälterträger und dem Behälterteller befestigt sind.

Gemäß einer bevorzugten Ausführungsform der Erfindung wird die Bauhöhe der Behälterträgereinheit dadurch variiert, dass verschieden hohe Behälterteller auf die Behälterträger aufgesetzt werden. Diese werden vorzugsweise mit einem Schnellverschluss wie z. B. einem Bajonettverschluss an dem Behälterträger befestigt.

Gemäß einer bevorzugten Weiterbildung der Erfindung besteht die Behälterträgereinheit aus zumindest einem Behälterträger, einen Behälterteller und einer Behälterzentrierung, wobei die Behälterzentrierung die Behälterkontur zumindest teilweise umfasst. Die Behälterzentrierung ist vorzugsweise so ausgebildet, dass zumindest ein kleiner Absatz vorhanden ist, in den der zu behandelnde Behälter eintauchen kann und gegen ein radiales Verschieben gesichert ist.

Eine weiter Möglichkeit der Veränderung der Bauhöhe der Behälterträgereinheit ist die, dass verschieden hohe Behälterzentrierungen auf den Behälterteller aufsetzbar sind. Eine weitere bevorzugte Ausführungsform besteht darin, dass sowohl Behälterteller als auch Behälterzentrierung in verschienen Höhen zur Verfügung stehen, um auf verschieden Behälterhöhen möglichst flexibel reagieren zu können. Dabei können vorzugsweise beliebige Kombinationen zwischen verschieden hohen Behältertellern und verschieden hohen Behälterzentrierungen gebildet werden.

Eine weitere Ausführungsform der Behälterträgereinheit besteht darin, dass die Bauhöhe durch das Anbringen von mehreren Behältertellern übereinander variiert werden kann.

Um möglichst viele Behälter mit den verschiedensten Konturen verarbeiten zu können, besteht eine bevorzugte Weiterbildung der Erfindung darin, dass jeder Behälterträger zumindest ein Zentrierelement aufweist, das ein Gegenstück aufnehmen kann, wobei das Gegenstück entweder an einem Distanzstück, an einem Behälterteller oder an einer Behälterzentrierung befestigt sein kann. Vorzugsweise sind die Zentrierelemente und die Gegenstücke so angebracht, dass die Behälterteller, die Distanzstücke oder die Behälterzentrierungen rotationspositionsabhängig am Behälterträger befestigt werden können. Vorzugsweise weist zumindest ein Bauelement wie Behälterträger, Behälterteller, Distanzstück oder Behälterzentrierung einen Sicherungsmechanismus auf, der die verbundenen genannten Bauelemente vor ungewolltem Lösen schützt.

Gemäß einer bevorzugten Weiterbildung der Erfindung befindet sich der Sicherungsmechanismus am Behälterträger. Dieser ist vorzugsweise als Schnellverschluss ausgebildet, so dass ein problemloses bzw. schnelles Lösen der genannten Bauelemente möglich ist. Der Sicherungsmechanismus kann z.B. ein Bajonettverschluss oder ein Schnappverschluss sein. Aber auch andere Verschlussmechanismen sind selbstverständlich vorstellbar. Die Behälterträgereinheit weist in einer bevorzugten Weiterbildung der Erfindung Mittel zur Übertragung einer Drehbewegung auf die Behälterträgereinheit auf. Bei dem Mittel handelt es sich vorzugsweise um ein Zahnrad, das bei in Eingriffbringung mit einem Zahnriemen den Behälterträger und somit auch die Behälterträgereinheit in Drehung versetzt. Die Drehung kann aber auch durch einen Servomotor erzeugt werden, wobei dann vorzugsweise jeder Behälterträger einen eigenen Servomotor besitzt.

Gemäß einer weiteren bevorzugten Weiterbildung der Erfindung weist die Behälterträgereinheit ein Hubelement auf, das es ermöglicht, die Behälterträgereinheit gegenüber der Transportebene senkrecht nach oben bzw. nach unten zu bewegen. In einer weiteren Ausführungsform wird das Hubelement von einer Kurvenrolle und einer Hubkurve gebildet, wobei die Ausbildung des Hubelements auch durch die Anbringung eines Zylinders, wie z.B. ein Pneumatik- bzw. Hydraulikzylinder, möglich ist.

Die soeben beschriebene Behälterträgereinheit wird gemäß einer bevorzugten Weiterbildung der Erfindung in einer Vorrichtung zum Etikettieren von Behältern eingesetzt. Eine solche Vorrichtung zum Etikettieren ist in den vorhergehenden Absätzen beschrieben.

Die Aufgabe bezüglich des Verfahrens zum Etikettieren von Behältern wird dadurch gelöst, dass je nach Größe der zu verarbeitenden Behälter der Abstand von der Transportebene zur Behälterträgereinheit durch die Veränderung der Bauhöhe der Behälterträgereinheit variiert wird, wobei vorzugsweise der Abstand durch das Auswechseln der Behälterteller verändert wird. Nach einer weiteren Weiterbildung der Erfindung wird der Abstand von der Transportebene zur Behälterträgereinheit durch das Auswechseln der Behälterträger variiert. Zur Variation der Höhe kann aber auch die gesamte Behälterträgereinheit ausgewechselt werden.

Eine weitere Weiterbildung der Erfindung besteht darin, dass das Verfahren derart ausgestaltet wird, dass zur Höhenveränderung zwischen der Behälterträgereinheit und der Transportebene Distanzstücke zwischen dem Behälterträger und dem Behälterteller eingesetzt werden.

Weiterhin ist es möglich, das mindestens eine Distanzstück nicht zwischen dem Behälterteller und dem Behälterträger einzusetzen, sondern auf den Behälterteller aufzusetzen. Diese Variation ist einfacher in der Handhabung da jeweils nur ein Distanzstück auf den Unterbau aufgesetzt werden muss, während bei einem Einsetzten von Distanzstücken Zwischenteile der Behälterträgereinheit immer eine Vorbehandlung, wie z. B. das Abnehmen des Behältertellers von dem Behälterträger, nötig ist.

Vorzugsweise werden die Behälter während ihrer Behandlung zwischen der Behälterträgereinheit und einer Zentrierglocke, die sich über dem Behälter befindet, eingespannt. Um das Einspannen zu bewerkstelligen lässt sich sowohl die Behälterträgereinheit als auch die Zentrierglocke nach oben bzw. nach unten entlang der Längsachse der Behälterträgereinheit bewegen.

Die klemmende Verbindung des zu behandelnden Behälters zwischen der Behälterträgereinheit und der Zentrierglocke wird vorzugsweise so hergestellt, dass der Behälter von einer Behälterzufuhr dem Traggestell mit den daran befestigten Behälterträgereinheiten und den Zentrierglocken zugeführt wird. Die Zufuhr erfolgt dabei so, dass der zu behandelnde Behälter zwischen die Behälterträgereinheit und die Zentrierglocke eingeführt wird, wobei sich die Oberkante der Behälterträgereinheit unterhalb des Bodens des zu behandelnden Behälters und die Zentrierglocke sich oberhalb der Mündung des zu behandelnden Behälters befindet. Nach der Einfuhr des Behälters zwischen die Behälterträgereinheit und die Zentrierglocke wird die Behälterträgereinheit bezüglich der Längsachse der Behälterträgereinheit nach oben und die Zentrierglocke bezüglich der Längsachse der Behälterträgereinheit nach unten verfahren, bis der Behälter klemmend gehalten wird. Alsdann kann die Behälterzufuhr den Behälter freigeben, bevor er sich um seine Längsachse drehend entlang der Behandlungsstrecke bewegt. Am Ende der Behandlungsstrecke wird der Behälter der Behälterabfuhr übergeben, die ihn aus der Behandlungsmaschine abführt. Die Übergabe des zu behandelnden Behälters von der Behandlungsstrecke an die Behälterabfuhr geschieht vorzugsweise so, dass die Behälterabfuhr, während der Behälter noch durch die Behälterträgereinheit und die Zentrierglocke klemmend gehalten wird, den Behälter zumindest über einen Teil seines Umfangs klemmend ergreift. Danach wird die Zentrierglocke und die Behälterträgereinheit entlang der Längsachse der Behälterträgereinheit nach oben bzw. nach unten wegbewegt, so dass der Behälter nur noch von der Behälterabfuhr klemmend ergriffen wird. Alsdann kann der Abtransport des behandelten Behälters erfolgen.

Gemäß einer bevorzugten Weiterbildung der Erfindung handelt es sich bei den zu behandelnden Behältern um Kunststoffbehälter, vorzugsweise um PET-Flaschen mit einem Halskragen. Die Behälterzufuhr und die Behälterabfuhr sind vorzugsweise Einlauf- bzw. Auslaufsternräder, die mit Klammern ausgestattet sind, um die Kunststoffflaschen am Halskragen zu ergreifen.

Die Kunststoffflaschen werden vorzugsweise so durch die Behandlungsvorrichtung bewegt, dass sich der Halskragen immer in der Transportebene bewegt, die sich parallel zum Traggestell befindet. Eine solche Anordnung hat den Vorteil, das trotz verschiedener Behälterhöhen, die in der Behandlungsmaschine verarbeitet werden, die Behälterzufuhr und die Behälterabfuhr in ihrer Höhe nicht verändert werden müssen. Unabhängig von der Flaschenhöhe befindet sich der Halskragen also immer in der Transportebene.

Gemäß einer bevorzugten Weiterbildung der Erfindung werden die Behälter von einer Behältertransporteinrichtung an den Einlaufstern übergeben. Dieses Verfahren hat den Vorteil, dass sich die Behälter in der Behältertransporteinrichtung ständig im gleichen Teilungsabstand befinden, weshalb sie leicht an den Einlaufstern, weiter zur Behandlungsstrecke und von dort an den Auslaufstern übergeben werden können. Es ist aber auch ein Verfahren denkbar, bei dem die zu behandelnden Behälter von der Behältertransporteinrichtung direkt an die Behandlungsstrecke übergeben werden.

Auch im Auslaufbereich der Behandlungsmaschine sind verschieden Übergabeverfahren denkbar. So ist es sowohl denkbar, die Behälter von der Behandlungsstrecke an den Auslaufstern und weiter an eine Behältertransporteinrichtung zu übergeben, als auch die Möglichkeit, die zu behandelnden Behälter von der Behandlungsstrecke direkt an eine Behältertransporteinrichtung zu übergeben.

Nachfolgend wird ein besonders bevorzugtes Ausführungsbeispiel anhand der Figuren erläutert. Dabei zeigt:
- Figur 1: eine Seitenansicht eines Flaschentisches einer Etikettiervorrichtung,
- Figur 2a: eine Seitenansicht einer Behälterträgereinheit einer Etikettiervorrichtung nach Figur 1,
- Figur 2b: eine perspektivische Ansicht einer Behälterträgereinheit einer Etikettiervorrichtung nach Figur 1,
- Figur 3a: eine Seitenansicht eines Behälterträgers
- Figur 3b: eine Seitenansicht eines Behälterträgers in geöffneter Stellung bereit zum Einfügen eines Distanzstückes
- Figur 3c: Draufsicht auf ein Distanzstück,
- Figur 4: eine schematische Draufsicht auf eine Behältertransporteinrichtung, eine Behälterzufuhr, eine Behandlungsstrecke, eine Behälterabfuhr sowie eine zweite Behältertransporteinrichtung,

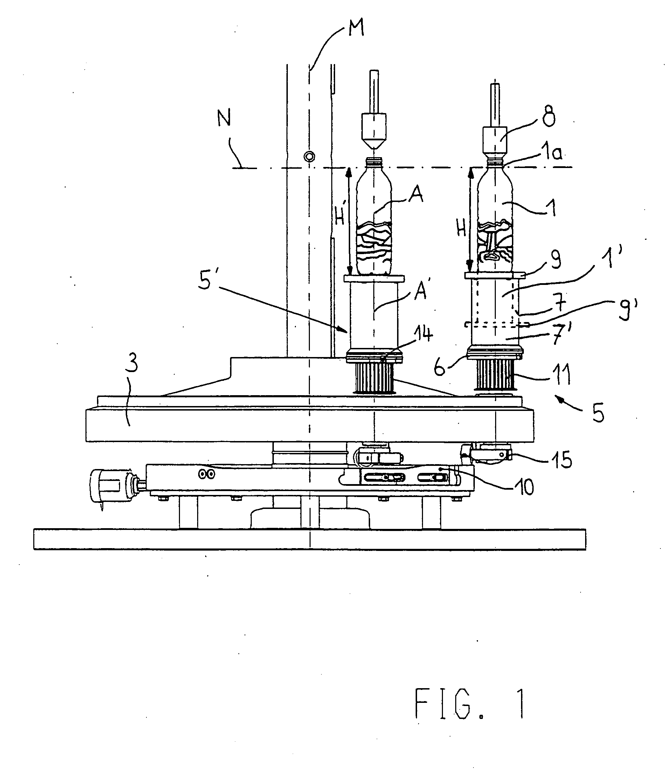

In Figur 1 ist ein Teil einer Behälteretikettiermaschine gezeigt. Es ist ein rundes, um eine Maschinenachse M umlaufendes Traggestell 3 zu sehen, an dessen Umfang in regelmäßigen Abständen Behälterträgereinheiten 5 befestigt sind, die drehbar gelagert im Traggestell 3 angebracht sind. Die Längsachsen der Behälterträgereinheiten A' befinden sich dabei parallel zu der Maschinenachse M. Der Übersichtlichkeit halber sind in Figur 1 nur zwei Behälterträgereinheiten 5 gezeigt. In Verlängerung zur Längsachse der Behälterträgereinheiten A' oberhalb der Behälterträgereinheit 5 befindet sich eine Zentrierglocke 8, deren Befestigung an einem hier nicht gezeigten Maschinengestell durchgeführt ist.

Sowohl die Behälterträgereinheit 5 als auch die Zentrierglocke 8 ist höhenbeweglich derart befestigt, dass eine Auf- und Abwärtsbewegung entlang der Längsachse der Behälterträgereinheit A' möglich ist.

Die Behälterträgereinheiten 5 bestehen aus jeweils einem Behälterträger 6, einem Behälterteller 7, einer Behälterzentrierung 9, einem Zahnrad 11 zur Übertragung von Drehbewegungen sowie einem Hubelement 15, das die Auf- bzw. Abwärtsbewegung bezüglich der Längsachse der Behälterträgereinheit A' durchführt bzw. überträgt.

In denjenigen Bereichen der Behandlungsstrecke in denen der Behälter 1 gedreht werden soll, greift ein hier nicht gezeigter Zahnriemen in das Zahnrad 11 ein und setzt somit die Behälterträgereinheit 5 in Rotationsbewegung. Das Hubelement 15, das sich hier unterhalb des Traggestells befindet, weist eine Rolle auf, die mit einer Hubkurve 10 in Eingriff steht. Die Hubkurve 10 weist Aussparungen und Erhöhungen auf, so dass die Rollen des Hubelements 15 bei ihrer Bewegung entlang der Hubkurve 10 diese Aussparungen und Erhebungen abtasten, so dass dadurch eine Hub- bzw. Senkbewegung der Behälterträgereinheiten entlang der Längsachsen der Behälterträgereinheiten A' vorgenommen werden kann. Das Hubelement 15 der Behälterträgereinheit 5' befindet sich in einer Ausnehmung der Hubkurve 10, so dass der Abstand H' von der Oberkante des Behältertellers 7 der Behälterträgereinheit 5' zu einer Transportebene N größer ist, als der Abstand H von der Oberkante des Behältertellers 7 der Behälterträgereinheit 5 zur Transportebene N.

Auf der Behälterträgereinheit 5 befindet sich ein rotationssymmetrischer Behälter 1, der konzentrisch zwischen dem Behälterteller 7 und der Zentrierglocke 8 eingeklemmt ist.

In strichlinierter Linie ist in Fig. 1 außerdem ein Behälterteller 7' mit seiner Behälterzentrierung 9' und einem sich darauf befindlichen Behälter 1' dargestellt. Dieser kleinere Behälterteller 7' wird auf den Behälterträger 6 aufgesetzt, wenn in der Vorrichtung nach Fig.1 höhere Behälter 1' verarbeitet werden.

Parallel zum Traggestell 3 oberhalb der Behälterträgereinheiten 5, 5' befindet sich die Transportebene N, in der sich während des gesamten Transports der Behälter 1 durch die Behandlungsvorrichtung die Halskragen 1a der Behälter 1 befinden.

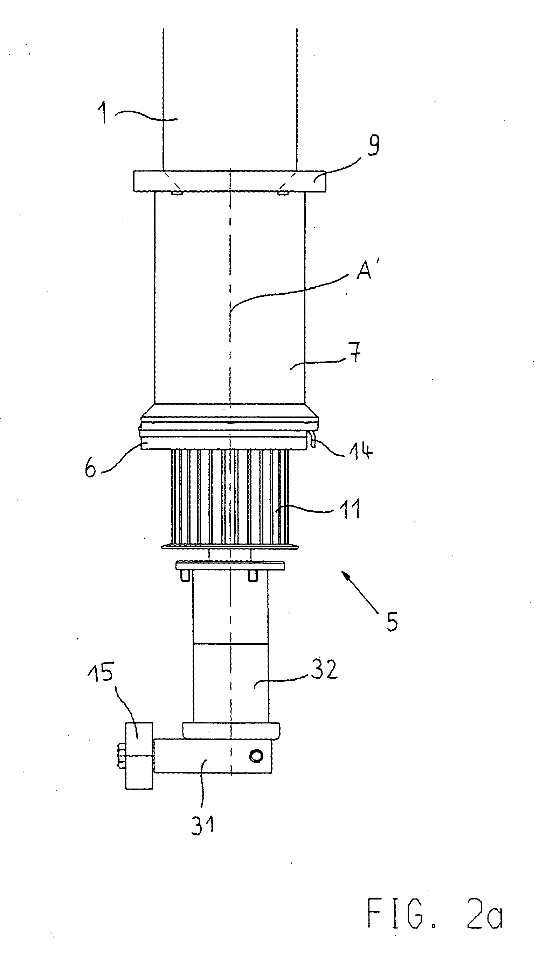

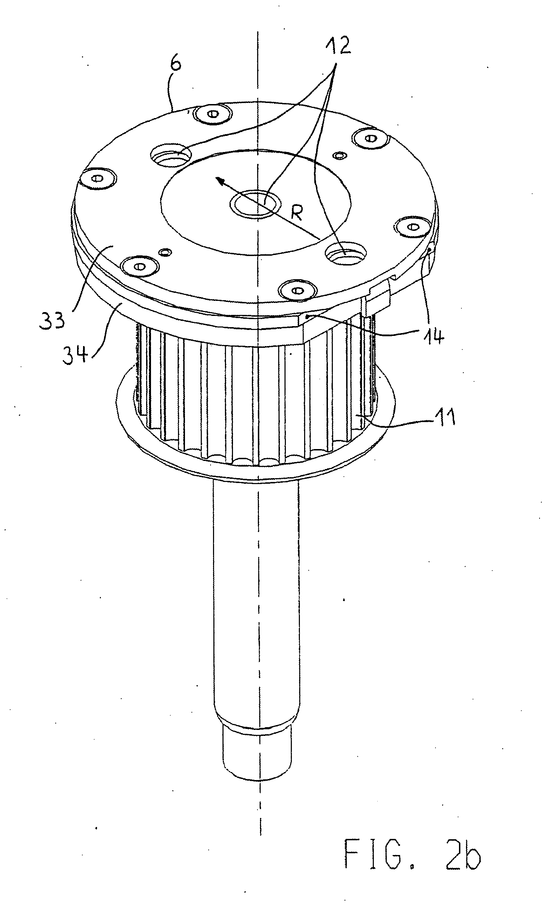

Figur 2 zeigt eine Behälterträgereinheit 5 wie sie gemäß Figur 1 im Traggestell 3 befestigt ist. Sie weist ein Hubelement 15 auf, das aus einer Rolle und einem Querträger 31 besteht, wobei dieses Element an einer Lagereinheit 32 befestigt ist, die ihrerseits in dem hier nicht gezeigten Traggestell 3 gelagert ist. Über der Lagereinheit 32 befindet sich konzentrisch zu dieser ein Zahnrad 11, das zur Übertragung von Drehbewegungen angebracht ist. Wiederum oberhalb des Zahnrads 11 befindet sich konzentrisch zu diesem ein Behälterträger 6 auf den - ebenfalls konzentrisch - der Behälterteller 7 aufgesetzt ist. Der Behälterteller 7 und der Behälterträger 6 sind mit einer hier nicht gezeigten Sicherung so miteinander verbunden, dass ein ungewolltes Lösen nicht möglich ist. Die Sicherung wird mittels eines Sicherungsmechanismus 14, der hier ein Hebel ist, betätigt. Konzentrisch auf den Behälterteller 7 ist eine Behälterzentrierung 9 angebracht, die einen sich zum Behälterteller 7 verjüngenden Bereich aufweist, in dem ein Behälter 1 zentriert aufgenommen werden kann.

Figur 2b zeigt eine perspektivische Ansicht des Behälterträgers nach Figur 2a, wobei der Behälterteller 7 sowie das Hubelement 15 fehlen. In dieser Ansicht erkennt man die Funktion des Sicherungsmechanismus 14, der den Behälterträger 6 und den Behälterteller 7 zusammenhält. Der Behälterträger 6 besteht u. a. aus einer oberen und einer unteren Platte 33, 34. Diese sind jeweils mit Zentrierelementen 12 versehen, die sich konzentrisch übereinander befinden. Zwischen der oberen und der unteren Platte 33, 34 befindet sich ein Sicherungsmechanismus 14. Der Sicherungsmechanismus 14 weist die gleichen Zentrierelemente 12 auf wie die obere und die untere Platte 33, 34, allerdings in der Ruheposition nicht konzentrisch, sondern den Mittelpunkt des Zentrierelements 12 entgegen der Richtung R verschoben. Durch Betätigung des Sicherungsmechanismus 14 wird dieser in Richtung R bewegt, wodurch die Zentrierelemente 12 des Sicherungsmechanismus in ein konzentrische Position zu den Zentrierelementen 12 der oberen bzw. der unteren Platte 33, 34 gebracht werden. In dieser Position kann ein Behälterteller 7 auf den Behälterträger 6 gesetzt werden.

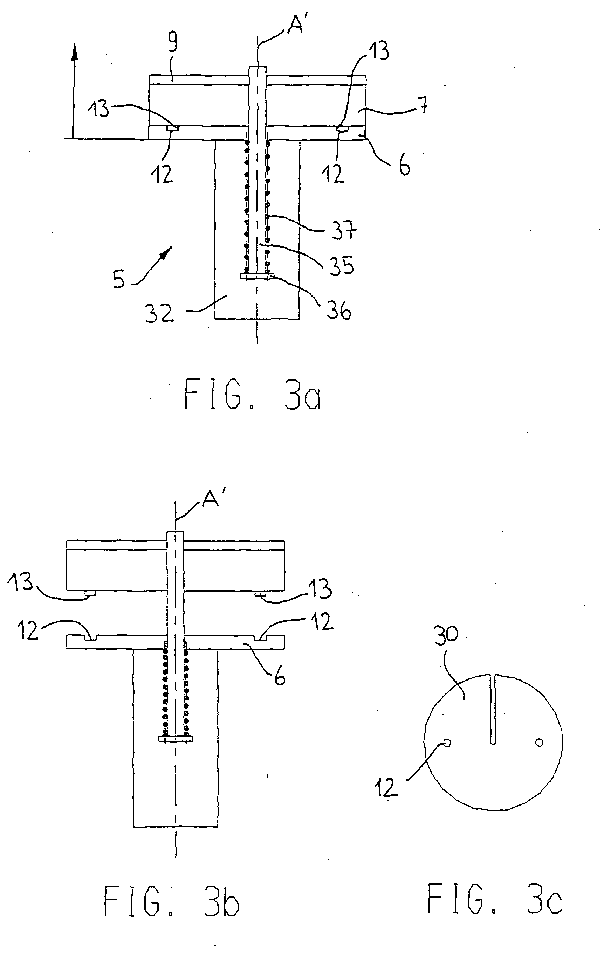

In Figur 3 wird eine weitere Ausführungsform der Höhenverstellbarkeit der Behälterträgereinheit 5 gezeigt. In der Lagereinheit 32 ist eine Zentralstange 35 angebracht, an deren unterem Ende sich ein Endstück 36 befindet. Zwischen dem Endstück 36 und dem Behälterträger 6 ist um die Zentralstange 35 eine Feder 37 angebracht. Bewegt man den Behälterteller 7 mit daran befestigter Behälterzentrierung 9 nach oben entlang der Längsachse der Behälterträgereinheit A', so wird die Zentralstange 35 mit dem Entstück 36 nach oben bewegt, so dass die Feder 37 zusammengedrückt wird. In den dadurch entstehenden Freiraum kann eine Distanzstück 30 eingesetzt werden. Das Distanzstück 30 weist Zentrierelemente 12 und Gegenstücke 13 auf, wobei die Gegenstücke 13 des Zentrierelements 30 in die Zentrierelemente 12 des Behälterträgers eingreifen.

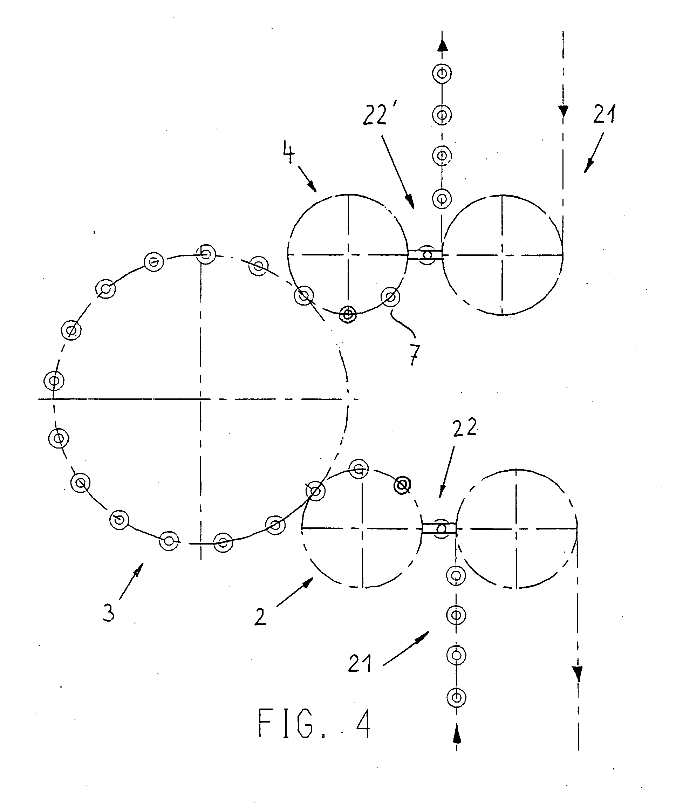

Die Figur 4 zeigt eine Draufsicht auf eine Vorrichtung zum Etikettieren von Flaschen, wobei die Flaschen 1 von Behältertransporteinrichtung 21 in Richtung des Übergabebereiches 22 transportiert werden. Die Flaschen 1 befinden sich in der Behältertransporteinrichtung 21 klemmend gehalten. In einem hier nicht gezeigten Greifer im Übergabebereich 22 wird der Behälter 1 von der Klammer der Behältertransporteinrichtung 21 an die Klammer des Einlaufsternrads 2 übergeben. Der Behälter 1 wird dabei jeweils oberhalb bzw. unterhalb des Tragrings 1a erfasst. Die Behälterzufuhr 2 führt den Behälter 1 in Richtung des Traggestells 3, wo er dann auf den Behälterteller 7 aufgesetzt wird. In dem Bereich auf dem Traggestell 3 zwischen dem Einlaufsternrad 2 und dem Auslaufsternrad 4 findet die Behandlung der Flasche 1 statt. Während der Durchführung der Flasche 1 durch den Behandlungsbereich ist sie klemmend von einer hier nicht gezeigten Zentrierglocke und dem Behälterteller 7 gehalten. Nach der Behandlung wird die Flasche an das Auslaufsternrad 4 übergeben. Diese Übergabe erfolgt dabei derart, dass das mit Greifern 16 bestückte Auslaufsternrad die Flasche 1 unterhalb des Halskragens 1a greift. Das sich entgegen dem Uhrzeigersinn drehende Auslaufsternrad 4 transportiert die Flasche 1 in Richtung des Übergabebereichs 22' wo sie an die mit Greifern 16 bestückte Kette der Behältertransporteinrichtung 21 übergeben und abtransportiert wird.

## Patentansprüche

1. Vorrichtung zum Behandeln von Behältern (1) mit einem Halskragen (1a), mit einer Behälterzufuhr (2), einem um eine Maschinenachse (M) parallel zu einer Transportebene (N) höhenfest umlaufenden Traggestell (3) und einer Behälterabfuhr (4), mit mehreren, in regelmäßigen Abständen an dem umlaufenden Traggestell (3) angebrachten Behälterträgereinheiten (5), die zumindest aus jeweils einem Behälterträger (6) und einem Behälterteller (7) bestehen, wobei die Behälter (1) zwischen jeweils einem Behälterteller (7) und einer Zentrierglocke (8) einklemmbar sind, wobei die Behälterzufuhr (2) und die Behälterabfuhr (4) höhenfest angeordnet sind und die Transporthöhe der Behälter (1) bezüglich der sich oberhalb der Behälterträgereinheit(s) befindenden Transportebene (N) während des Transports durch die Vorrichtung nicht veränderbar ist, **dadurch gekennzeichnet, dass** zum Behandeln von verschieden hohen Behältern in ein and der selben vorrichtung der Abstand von der Behälterträgereinheit (5) zur Transportebene (N) durch die Variation der Bauhöhe der Behälterträgereinheit (5) veränderbar ist.

2. Vorrichtung zum Behandeln von Behältern nach Anspruch 1, **dadurch gekennzeichnet, dass** zwischen dem Behälterträger (6) und dem Behälterteller (7) Distanzstücke einsetzbar sind, oder verschieden hohe Behälterträger (6) verwendbar sind oder verschieden hohe Behälterteller (7) auf den Behälterträger aufsetzbar sind.

3. Vorrichtung zum Behandeln von Behältern (1) nach wenigstens einem der vorhergehenden Ansprüche, **dadurch gekennzeichnet, dass** die Behälterträgereinheit (5) aus dem Behälterträger (6), dem Behälterteller (7) und einer Behälterzentrierung (9) besteht, die die Behälterkontur zumindest teilweise erfasst.

4. Vorrichtung nach Anspruch 3, **dadurch gekennzeichnet, dass** verschieden hohe Behälterzentrierungen (9) auf den Behälterteller (6) aufsetzbar sind.

5. Vorrichtung nach Anspruch 1, **dadurch gekennzeichnet, dass** die Behälterzufuhr (2) ein Einlaufsternrad (2) und/oder die Behälterabfuhr (4) ein Auslaufsternrad (4) ist.

6. Vorrichtung zum Behandeln von Behältern (1) nach wenigstens einem der vorhergehenden Ansprüche, **dadurch gekennzeichnet, dass** die zu behandelnden Behälter (1) PET-Flaschen (1) mit einem Halskragen (1a) sind.

7. Vorrichtung nach Anspruch 6, **dadurch gekennzeichnet, dass** die zu behandelnden Behälter (1) vom Einlaufsternrad (2) und vom Auslaufsternrad (4) mittels eines Greifelements (16) oberhalb oder unterhalb des Halskragens (1a) ergreifbar sind.

8. Vorrichtung nach wenigstens einem der vorhergehenden Ansprüche, **dadurch gekennzeichnet, dass** die Behälterträgereinheiten (5) relativ zum Traggestell (3) in Richtung der Längsachse der Behälterträgereinheit (A') bewegbar sind.

9. Vorrichtung nach Anspruch 8, **dadurch gekennzeichnet, dass** die Bewegung der Behälterträgereinheit (A') in Richtung der Längsachse der Behälterträgereinheit (A') durch eine Hubkurve (10) oder durch einen Pneumatikzylinder und/oder einen Hydraulikzylinder vollziehbar ist.

10. Vorrichtung nach wenigstens einem der vorhergehenden Ansprüche, **dadurch gekennzeichnet, dass** die Zentrierglocken (8) relativ zum Traggestell (3) in Richtung der Längsachse der Behälterträgereinheit (A') bewegbar sind.

11. Vorrichtung nach wenigstens einem der vorhergehenden Ansprüche, **dadurch gekennzeichnet, dass** die Behälterträgereinheiten (5) im Traggestell (3) um ihre eigene Längsachse (A') drehbar gelagert sind.

12. Vorrichtung nach einem der vorhergehenden Ansprüche, **dadurch gekennzeichnet, dass** die Behälterträgereinheiten (5) Mittel zur Übertragung von Drehbewegungen (11) um die eigene Längsachse (A') aufweisen.

13. Vorrichtung nach Anspruch 12, **dadurch gekennzeichnet, dass** die Mittel zur Übertragung von Drehbewegungen (11) Zahnräder (11) oder Servomotoren sind.

14. Vorrichtung nach Anspruch 12, **dadurch gekennzeichnet, dass** bei als Servomotoren (11) ausgestalteten Mitteln zur Übertragung von Drehbewegungen (11) jede Behälterträgereinheit (5) einen eigenen Servomotor besitzt.

15. Vorrichtung nach wenigstens einem der vorhergehenden Ansprüche, **dadurch gekennzeichnet, dass** jeder Behälterträger (6) zumindest ein Zentrierelement (12) aufweist, das ein sich am Behälterteller (7) befindliches Gegenstück (13) aufnehmen kann.

16. Vorrichtung nach Anspruch 15, **dadurch gekennzeichnet, dass** jeder Behälterträger (6) mehrere Zentrierelemente (12) so angeordnet aufweist, dass ein stellungsgerechtes Positionieren des Behältertellers (7) am Behälterträger (6) möglich ist.

17. Verfahren zum Etikettieren von Behältern (1) mit einem Halskragen (1a), mit einer Vorrichtung mit einer Behälterzufuhr (2), einem um eine Maschinenachse (M) parallel zu einer Transportebene (N) höhenfest umlaufenden Traggestell (3) und einer Behälterabfuhr (4), mit mehreren, in regelmäßigen Abständen an dem umlaufenden Traggestell (3) angebrachten Behälterträgereinheiten (5), die zumindest aus jeweils einem Behälterträger (6) und einem Behälterteller (7) bestehen, wobei die Behälter (1) zumindest teilweise während der Durchführung durch eine Behandlungsstrecke, die sich entlang dem Traggestell (3) bewegt, zwischen jeweils einer Behälterträgereinheit (5) und einer Zentrierglocke (8) eingeklemmt werden, wobei die Behälterzufuhr (2) und die Behälterabfuhr (4) höhenfest angeordnet sind und wobei die Behälter (1) ihre Transporthöhe bezüglich der sich oberhalb der Behälterträgereinheit (5) befindenden. Transportebene (N) nicht verändern, **dadurch gekennzeichnet, dass** zum Etikettieren von verschieden hohen Behältern in ein und der selben Vorrichtung je nach Größe der zu verarbeitenden Behälter (1) der Abstand von der Transportebene (N) zur Behälterträgereinheit (5) durch die Veränderung der Bauhöhe der Behälterträgereinheit (5) variiert wird.

## Claims

1. Device for processing receptacles (1) with a collar (1a), with a receptacle feed (2), a supporting structure (3) revolving around a machine axis (M) at a fixed height parallel to a conveying level (N) and a receptacle discharge (4), with several receptacle carrier units (5) mounted on the revolving supporting structure (3) at regular intervals, which consist of at least a receptacle carrier (6) and a receptacle plate (7) respectively, in which the receptacles (1) may each be clamped between a receptacle plate (7) respectively and a centring bell (8), in which the receptacle feed (2) and the receptacle discharge (4) are arranged at a fixed height and the conveying height of the receptacles (1) may not be changed by the device during conveying with reference to the conveying level (N) situated above the receptacle carrier unit (5), **characterised in that** to process receptacles of different heights in one and the same device the distance from the receptacle carrier unit (5) to the conveying level (N) may be changed by changing the overall height of the receptacle carrier unit (5).

2. Device for processing receptacles according to claim 1, **characterised in that** distance pieces may be inserted between the receptacle carrier (6) and the receptacle plate (7) or receptacle carriers (6) of different heights may be used or receptacle plates (7) of different heights may be put on the receptacle carrier.

3. Device for processing receptacles (1) according to at least one of the previous claims, **characterised in that** the receptacle carrier unit (5) consists of the receptacle carrier (6), the receptacle plate (7) and a receptacle centring device (9), which at least partly holds the receptacle contour.

4. Device according to claim 3, **characterised in that** receptacle centring devices (9) of different heights may be put on the receptacle plate (6).

5. Device according to claim 1, **characterised in that** the receptacle feed (2) is an infeed star wheel (2) and/or the receptacle discharge (4) is a discharge star wheel (4).

6. Device for processing receptacles (1) according to at least one of the previous claims, **characterised in that** the receptacles (1) to be processed are polyethylene bottles (1) with a collar (1a).

7. Device according to claim 6, **characterised in that** the receptacles (1) to be processed may be taken hold of from the infeed star wheel (2) and from the discharge star wheel (4) by means of a gripping element (16) above or below the collar (1a).

8. Device according to at least one of the previous claims, **characterised in that** the receptacle carrier units (5) may be moved in relation to the supporting structure (3) in the direction of the longitudinal axis of the receptacle carrier unit (A').

9. Device according to claim 8, **characterised in that** the movement of the receptacle carrier unit (A') in the direction of the longitudinal axis of the receptacle carrier unit (A') may be produced through a cam system (10) or through a pneumatic cylinder and/or a hydraulic cylinder.

10. Device according to at least one of the previous claims, **characterised in that** the centring bells (8) may be moved in relation to the supporting structure (3) in the direction of the longitudinal axis of the receptacle carrier unit (A').

11. Device according to at least one of the previous claims, **characterised in that** the receptacle carrier units (5) are mounted in the supporting structure (3) so that they may rotate around their own longitudinal axis (A').

12. Device according to one of the previous claims, **characterised in that** the receptacle carrier units (5) have means for transferring rotations (11) around their own longitudinal axis (A').

13. Device according to claim 12, **characterised in that** the means of transferring rotations (11) are toothed wheels (11) or servomotors.

14. Device according to claim 12, **characterised in that** in the case of the means for transferring rotations (11) being servomotors (11) each receptacle carrier unit (5) has its own servomotor.

15. Device according to at least one of the previous claims, **characterised in that** each receptacle carrier (6) has at least one centring element (12), which may house a counterpart (13) located on the receptacle plate (7).

16. Device according to claim 15, **characterised in that** each receptacle carrier (6) has several centring elements (12) arranged so that it is possible to position the receptacle plate (7) on the receptacle carrier (6) correctly according to the setting.

17. Method for labelling receptacles (1) with a collar (1a) with a device with a receptacle feed (2), a supporting structure (3) revolving around a machine axis (M) at a fixed height parallel to a conveying level (N) and a receptacle discharge (4), with several receptacle carrier units (5) mounted on the revolving supporting structure (3) at regular intervals, which consist of at least a receptacle carrier (6) and a receptacle plate (7), in which the receptacles (1) are clamped between a receptacle carrier unit (5) and a centring bell (8) respectively at least partly whilst being carried through a processing section, which moves along the supporting structure (3), in which the receptacle feed (2) and the receptacle discharge (4) are arranged at a fixed height and in which receptacles (1) do not change their conveying height with reference to the conveying level (N) located above the receptacle carrier unit (5), **characterised in that** to label receptacles of different heights in one and the same device the distance from the conveying level (N) to the receptacle carrier unit (5) is changed by changing the overall height of the receptacle carrier unit (5) depending on the size of the receptacles (1) to be processed.

## Revendications

1. Dispositif de traitement de récipients (1) à col (1a) comprenant une entrée de récipients (2), un châssis de support (3), fixe en hauteur par rapport à un plan de transport (N), tournant autour d'un axe de machine (M) ainsi qu'une sortie de récipients (4),
- plusieurs modules porte-récipient (5) sont installés à des intervalles réguliers sur le châssis de support (3), tournant, ces modules se composant chacun au moins d'un support de récipient (6) et d'une coupelle à récipient (7),
- les récipients (1) étant serrés chacun entre une coupelle à récipient (7) et une cloche de centrage (8),
- l'entrée de récipients (2) et la sortie de récipients (4) étant à hauteur fixe et pendant le transport, la hauteur de transport des récipients (1) par rapport au plan de transport (N) qui se trouve au-dessus des modules porte-récipient (5), n'est pas modifiée par le dispositif,
**caractérisé en ce que**
pour traiter des récipients de hauteurs différentes, dans un seul et même dispositif, la distance entre le module porte-récipient (5) et le plan de transport (N) se change par changement de la hauteur du module porte-récipient (5).

2. Dispositif de traitement de récipients selon la revendication 1,
**caractérisé en ce que** des pièces d'écartement se montent entre le support de récipient (6) et la coupelle à récipient (7) ou encore on utilise des supports de récipient (6) de hauteurs différentes ou encore on installe des coupelles à récipient (7) de hauteurs différentes sur le support de récipient.

3. Dispositif de traitement de récipients (1) selon les revendications précédentes,
**caractérisé en ce que**
le module porte-récipient (5) se compose d'un support de récipient (6), d'une coupelle à récipient (7) et d'un moyen de centrage de récipient (9), saisissant au moins en partie le contour du récipient.

4. Dispositif selon la revendication 3,
**caractérisé en ce que**
le support de récipient (7) reçoit des moyens de centrage de récipient (9), de hauteurs différentes.

5. Dispositif selon la revendication 1,
**caractérisé en ce que**
l'entrée de récipients (2) est une étoile d'entrée (2) et/ou la sortie de récipients (4) est une étoile de sortie (4).

6. Dispositif de traitement de récipients (1) selon les revendications précédentes,
**caractérisé en ce que**
les récipients (1) à traiter sont des bouteilles en polyéthylène PET (1) munies d'un col (1a).

7. Dispositif selon la revendication 6,
**caractérisé en ce que**
entre l'étoile d'entrée (2) et l'étoile de sortie (4), les récipients à traiter (1), sont pris par un élément de préhension (16) au-dessus ou en dessous du col (1a).

8. Dispositif selon les revendications précédentes,
**caractérisé en ce que**
les modules porte-récipient (5) sont mobiles par rapport au châssis de support (3) dans la direction de l'axe longitudinal (A') des modules de récipient.

9. Dispositif selon la revendication 8,
**caractérisé en ce que**
le mouvement du module porte-récipient (5) dans la direction de l'axe longitudinal (A') du module porte-récipient (5) est assuré par une came de soulèvement (10) ou par un vérin pneumatique et/ou un vérin hydraulique.

10. Dispositif selon les revendications précédentes,
**caractérisé en ce que**
les cloches de centrage (8) sont mobiles par rapport au châssis de support (3) dans la direction de l'axe longitudinal (A') du module porte-récipient (5).

11. Dispositif selon les revendications précédentes,
**caractérisé en ce que**
les modules porte-récipient (5) sont montés à rotation sur le châssis de support (3), pour tourner autour de leur propre axe longitudinal (A').

12. Dispositif selon les revendications précédentes,
**caractérisé en ce que**
les modules porte-récipient (5) comportent des moyens pour transmettre des mouvements de rotation (11) autour de leur propre axe longitudinal (A').

13. Dispositif selon la revendication 12,
**caractérisé en ce que**
les moyens de transmission des mouvements de rotation (11) sont des pignons dentés (11) ou des servomoteurs.

14. Dispositif selon la revendication 12,
**caractérisé en ce que**
pour des moyens de transmission des mouvements de rotation (11) constitués par des servomoteurs (11), chaque module porte-récipient (5) possède son propre servomoteur.

15. Dispositif selon les revendications précédentes,
**caractérisé en ce que**
chaque support de récipient (6) comporte au moins un élément de centrage (12) qui peut recevoir une pièce complémentaire (13) de la coupelle à récipient (7).

16. Dispositif selon la revendication 15,
**caractérisé en ce que**
chaque support de récipient (6) comporte plusieurs éléments de centrage (12) de façon à permettre un positionnement correct de la coupelle à récipient (7) sur le support de récipient (6).

17. Procédé d'étiquetage de récipients (1) à cols (1a), à l'aide d'un dispositif comportant une entrée de récipients (2), un châssis de support (3) tournant autour d'un axe de machine (M), parallèlement à un plan de transport (N), de hauteur fixe, ainsi qu'une sortie de récipients (4) ayant plusieurs modules porte-récipient (5) installés à intervalles réguliers sur le châssis de support (3) tournant, ces modules se composant chacun au moins d'un support de récipient (6) et d'une coupelle à récipient (7),
les récipients (1) se déplaçant au moins partiellement lors du passage dans un chemin de traitement le long du châssis de support (3), en étant serrés chacun entre un module porte-récipient (5) et une cloche de centrage (8),
l'entrée de récipient (2) et la sortie de récipient (4) étant fixes en hauteur et les récipients (1) ne changent pas de hauteur de transport par rapport au plan de transport (N) qui se trouve au-dessus du module porte-récipient (5),
**caractérisé en ce que**
pour étiqueter des récipients de hauteurs différentes, dans un seul et même dispositif, suivant la taille du récipient (1) à traiter, on change la distance entre le plan de transport (N) et le module porte-récipient (5) en modifiant la hauteur du module porte-récipient (5).
